# EUROPEAN PATENT SPECIFICATION

(11) **EP 3 886 362 B1**
(45) Date of publication and mention of the grant of the patent: **02.10.2024**
(21) Application number: 20164922.5
(22) Date of filing: 23.03.2020
(51) Int. Cl.: H04L 12/10

(54) **FIELD DEVICE**
FELDVORRICHTUNG
DISPOSITIF DE TERRAIN

(43) Date of publication of application: 29.09.2021
(73) Proprietor: ABB Schweiz AG, 5400 Baden (CH)
(72) Inventor: HORST, Georg, 37154 Northeim (DE)
(74) Representative: Maiwald GmbH

(56) References cited:
- EP-A1- 3 166 253
- US-A1- 2008 294 915
- US-A1- 2009 228 722
- US-A1- 2018 139 062

## Description

### FIELD OF THE INVENTION

The present invention relates to a field device as used in industrial measuring, such as a 4-wire filed device.

### BACKGROUND OF THE INVENTION

US2018/139062A1 describes that methods and systems facilitate field devices controlled by networks using Power-over-Ethernet. It is described that the field device includes a field-side circuit having a plurality of universal and independent configurable (and re-configurable) input-output interface that can universally interface to most industrial field devices, and that each channel employs a group of analog-to-digital conversion and digital-to-analog conversion paths that facilitate independent data flows in which signals are not multiplexed across individual interfaces. It is described that the field-side circuit operatively couples to a control side circuit with two Power-over-Ethernet modules, e.g., for redundancy, that each facilitates communication and power to the field-side circuit while, concurrently, reducing wiring complexity for a redundant system during installation.

Customer communication with field devices takes place via several digital and analogue interfaces, such as for 4-20mA, pulse, frequency or switching output.

However, the overall field device, including its digital and analogue interfaces, becomes very complex in terms of power supply requirements.

There is a need to address this issue.

### SUMMARY OF THE INVENTION

Therefore, it would be advantageous to have an improved power supply technology for a field device.

The object of the present invention is solved with the subject matter of the independent claims, wherein further embodiments are incorporated in the dependent claims.

In an aspect, there is provided a field device as defined in appended claim 1.

The invention and its scope of protection is defined by the above referenced independent claim.

The field device comprises:
- one or more digital and/or analogue interfaces; and
- an Ethernet interface;

The field device is configured such that power for the one or more digital and/or analogue interfaces is power derived from power for the Ethernet interface.

In this manner rather than having separate power supplies for each digital or analogue interface of a field device as required at present, a flexible power supply concept is provided where these interfaces obtain their voltage and power from the power supply for an Ethernet interface.

The field device is configured such that power for the field device is derived from the power for the Ethernet interface.

Thus, the field device itself does not require a separate power supply, but is taking its power from the power for the Ethernet interface.

The Ethernet interface comprises one or more Power over Ethernet (POE) capable switches and power for the one or more digital and/or analog interfaces is provided from the one or more POE capable switches.

In this manner, a simple and convenient power connection means is provided via POE capable switches for the Ethernet interface, enabling simple and easier retrofitting or replacement of analogue and digital interfaces to the field device.

One or more power lines for the one or more digital and/or analogue interfaces are configured to connect to the one or more POE capable switches.

In an example, power for the field device is provided from a POE capable switch.

In an example, a power line for the field device is configured to connect to the POE capable switch.

In an example, the power for the Ethernet interface is provided via an Ethernet cable.

Thus only one cable connection is required, that provides for both data communication and for all power needs.

In an example, the field device is a 4-wire field device.

The one or more digital and/or analogue interfaces are configured to be disconnected from the field device.

The above aspect and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic representation of an example of a known field device; and
Fig. 2 shows a schematic representation of an example of a new field device.

### DETAILED DESCRIPTION OF EMBODIMENTS

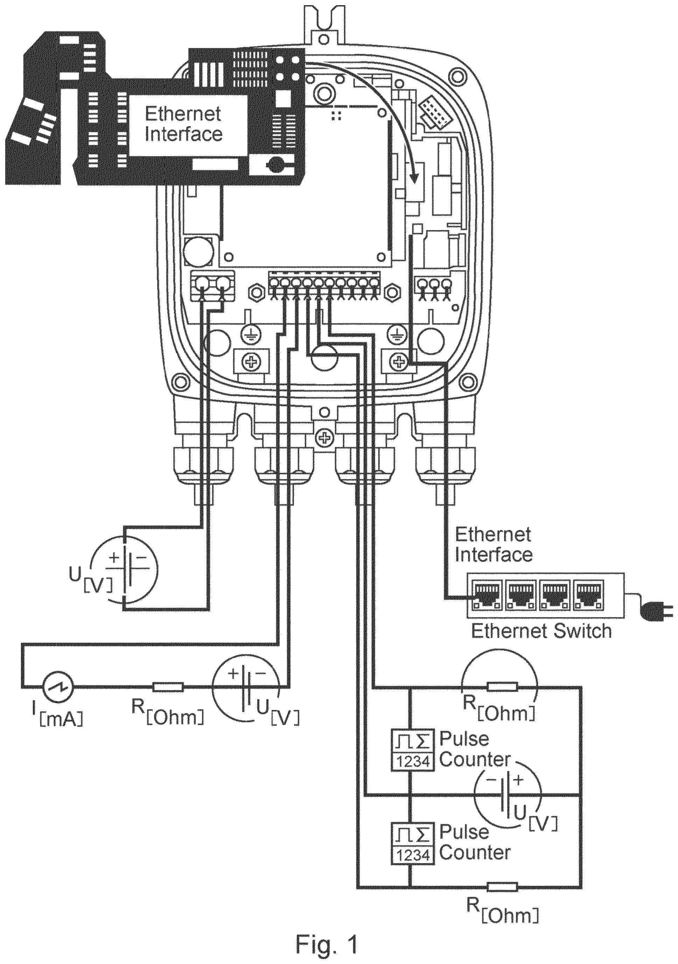

Fig. 1 shows a typical 4-wire field device, as usual in the field of industrial measuring technology. This has a separate voltage input source in order to the power up the device. Customer communication takes place via several digital and analogue interfaces. For contacting the analogue interfaces, such as 4-20mA, pulse, frequency or switching output, the customer must then provide an additional, separate voltage source for supplying the interfaces with power.

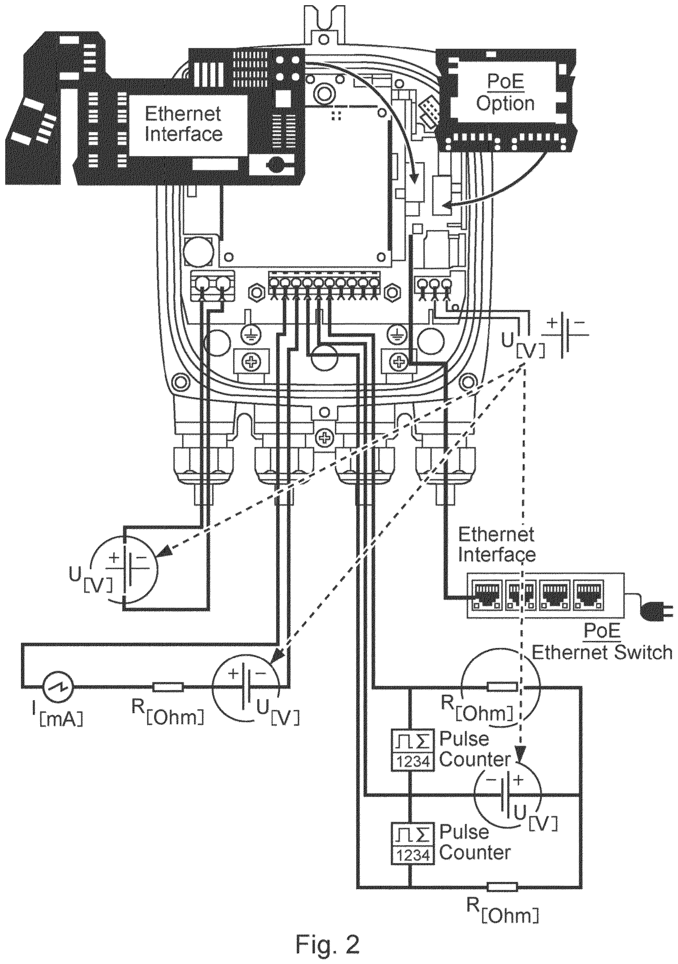

Fig. 2 shows a new field device, which reduces the cost of the field device and analogue and digital interfaces and reduces installation costs.

The new field device comprises one or more digital and/or analogue interfaces, and an Ethernet interface. The field device is configured such that power for the one or more digital and/or analogue interfaces is power derived from power for the Ethernet interface.

The field device is configured such that power for the field device is derived from the power for the Ethernet interface.

The Ethernet interface comprises one or more Power over Ethernet (POE) capable switches and power for the one or more digital and/or analog interfaces is provided from the one or more POE capable switches.

One or more power lines for the one or more digital and/or analogue interfaces are configured to connect to the one or more POE capable switches.

In an example, power for the field device is provided from a POE capable switch.

In an example, a power line for the field device is configured to connect to the POE capable switch.

In an example, the power for the Ethernet interface is provided via an Ethernet cable.

In an example, the field device is a 4-wire field device.

The one or more digital and/or analogue interfaces are configured to be disconnected from the field device.

Continuing with Fig. 2, a specific and detailed embodiment of the new field device is described.

The new field device also has an Ethernet interface. This can be used for configuration and maintenance as well as for the cyclic data exchange between terminal and control system. This Ethernet interface works in parallel with the analogue and digital 4-20mA, Pulse, Frequency and Switch output signals. However, the Ethernet interface is also utilized as a means to provide power to the digital and analogue interfaces as well as power for the field device itself. This is shown via the arrows that extend from a number of Power over Ethernet (POE) capable switches of the Ethernet interface that extend to power supplies of a number of digital or analogue interfaces of the field device and a power supply of the field device itself. This represents that the POE capable switches can be used to replace these power supplies.

In this manner use of Power over Ethernet (POE) is made not just for the intended use of the device supply and Ethernet communication, but also for the supply of the device and its other analogue and digital interfaces. This leads to a device that is easier and cheaper to setup and easier and cheaper to install with respect to the setup and installation costs of a conventional field device. Also retrofit to the new field device with power based on POE powering is much easier and cost-effective than the installation of additional external voltage sources and electrical wires as required for a conventional field device.

With the POE technology (with Power over Ethernet, as defined in the IEEE802.3af) data and power can be made available via the same Ethernet cable, and separate power supplies are no longer needed. The voltage and power supply of the terminals or analogue and digital interfaces is provided by so-called POE capable switches. Thus the device communicates with a network via the same line via which it and its digital and analogue interfaces are being powered.

Continuing with fig. 2, all external power sources, that are used only for the operation of the device itself as well as its digital and analogue interfaces, can be omitted. Furthermore, it is to be noted that it is not necessary that the POE general intended use cases of digital Ethernet communication with the remote station apply. Only the power transfer from the POE switch to the device and the digital and analogue interfaces is relevant here. With such a setup / installation, the customer saves all external power sources and the laying of additional electric wire to the device. The communication to the analogue and digital signals, such as 4-20mA, pulse-, frequency- or switching output, is still the customer's primary relevant use case for the integration of the devices to a control system or to an evaluation unit. The Ethernet communication can be used for configuration and maintenance as well as for the cyclic data exchange between terminal and control system, but this does not have to be the case. The customer advantage here also results from the perspective that an already existing network structure can be reused, because retrofitting to a POE-capable switch can be realized in a more simply and cost-effectively way, than the installation of additional external voltage sources and electrical wires for the integration of the analogue and digital interfaces of the field devices.

The technology finds utility in field devices such as: Actuators; Positioners; Recorders & Controllers; Ultrasonic Level Transmitters & Switches; Coriolis Flowmeters; Compact dP Flowmeters; Electromagnetic Flowmeters; Thermal Mass Flowmeters; Variable Area Flowmeters; Swirl Flowmeters; Laser Level Transmitters & Scanners; Multivariable Transmitters; Vortex Flowmeters; Temperature Transmitters; Pressure Transducers; Pressure Transmitters, amongst others.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

## Claims

1. A field device, comprising:
- one or more digital and/or analogue interfaces; and
- an Ethernet interface:
wherein, the field device is configured such that power for the one or more digital interfaces and/or analogue interfaces is power derived from power for the Ethernet interface;
wherein the field device is configured such that power for the field device is derived from the power for the Ethernet interface;
wherein the Ethernet interface comprises one or more Power over Ethernet, POE, capable switches and wherein power for the one or more digital interfaces and/or analog interfaces is provided from the one or more POE capable switches, and wherein one or more power lines for the one or more digital interfaces and/or analogue interfaces are configured to connect to the one or more POE capable switches; and
wherein the one or more digital interfaces and/or analogue interfaces are configured to be disconnected from the field device.

2. Field device according to claim 1, wherein power for the field device is provided from a POE capable switch.

3. Field device according to claim 2, wherein a power line for the field device is configured to connect to the POE capable switch.

4. Field device according to any of claims 1-3, wherein the power for the Ethernet interface is provided via an Ethernet cable.

5. Field device according to any of claims 1-4, wherein the field device is a 4-wire field device.

## Patentansprüche

1. Ein Feldgerät, umfassend:
- eine oder mehrere digitale und/oder analoge Schnittstellen; und
- eine Ethernet-Schnittstelle:
wobei das Feldgerät so konfiguriert ist, dass eine Stromversorgung für die eine oder mehreren digitalen Schnittstellen und/oder analogen Schnittstellen eine Stromversorgung ist, die von einer Stromversorgung für die Ethernet-Schnittstelle abgeleitet wird;
wobei das Feldgerät so konfiguriert ist, dass eine Stromversorgung des Feldgeräts von der Stromversorgung der Ethernet-Schnittstelle abgeleitet wird;
wobei die Ethernet-Schnittstelle einen oder mehrere Power-over-Ethernet-, POE-fähige Switches umfasst und wobei die Stromversorgung für die eine oder mehreren digitalen Schnittstellen und/oder analogen Schnittstellen von dem einen oder den mehreren POE-fähigen Switches bereitgestellt wird und wobei eine oder mehrere Stromleitungen für die eine oder mehreren digitalen Schnittstellen und/oder analogen Schnittstellen so konfiguriert sind, dass sie mit dem einen oder den mehreren POE-fähigen Switches verbunden sind; und
wobei die eine oder mehreren digitalen Schnittstellen und/oder analogen Schnittstellen so konfiguriert sind, dass sie von dem Feldgerät getrennt werden können.

2. Feldgerät nach Anspruch 1, wobei eine Stromversorgung des Feldgeräts über einen POE-fähigen Switch erfolgt.

3. Feldgerät nach Anspruch 2, wobei eine Stromleitung für das Feldgerät so konfiguriert ist, dass sie mit dem POE-fähigen Switch verbunden ist.

4. Feldgerät nach einem der Ansprüche 1 bis 3, wobei die Stromversorgung für die Ethernet-Schnittstelle über ein Ethernet-Kabel erfolgt.

5. Feldgerät nach einem der Ansprüche 1-4, wobei das Feldgerät ein 4-Draht-Feldgerät ist.

## Revendications

1. Dispositif de terrain comportant :
- une ou plusieurs interfaces numériques et/ou analogiques ; et
- une interface Ethernet :
le dispositif de terrain étant configuré de telle façon qu'une alimentation destinée à l'interface ou aux interfaces numériques et/ou analogiques soit une alimentation tirée d'une alimentation destinée à l'interface Ethernet ;
le dispositif de terrain étant configuré de telle façon qu'une alimentation destinée au dispositif de terrain soit tirée de l'alimentation destinée à l'interface Ethernet ;
l'interface Ethernet comportant un ou plusieurs commutateurs aptes à une alimentation sur Ethernet, POE, et une alimentation destinée à l'interface ou aux interfaces numériques et/ou analogiques étant fournie à partir du ou des commutateurs aptes au POE, et une ou plusieurs lignes d'alimentation pour l'interface ou les interfaces numériques et/ou analogiques étant configurées pour se connecter au(x) commutateur(s) apte(s) au POE ; et
l'interface ou les interfaces numériques et/ou analogiques étant configurées pour être déconnectées du dispositif de terrain.

2. Dispositif de terrain selon la revendication 1, une alimentation destinée au dispositif de terrain étant fournie à partir d'un commutateur apte au POE.

3. Dispositif de terrain selon la revendication 2, une ligne d'alimentation destinée au dispositif de terrain étant configurée pour se connecter au commutateur apte au POE.

4. Dispositif de terrain selon l'une quelconque des revendications 1 à 3, l'alimentation destinée à l'interface Ethernet étant fournie par l'intermédiaire d'un câble Ethernet.

5. Dispositif de terrain selon l'une quelconque des revendications 1 à 4, le dispositif de terrain étant un dispositif de terrain à 4 fils.
